(19) Europäisches Patentamt
European Patent Office
Office européen des brevets

(11) Publication number : **0 647 674 A1**

(12) # EUROPEAN PATENT APPLICATION

(21) Application number : **94401474.5**

(22) Date of filing : **29.06.94**

(51) Int. Cl.[6] : **C08K 5/524,** C08K 5/15, C08K 5/50, C08L 67/02, C08G 63/91

(30) Priority : **10.09.93 KR 1824593**

(43) Date of publication of application : **12.04.95 Bulletin 95/15**

(84) Designated Contracting States : **DE FR GB IT**

(71) Applicant : **CHEIL SYNTHETICS INC.**
**1, Chungsan-Dong**
**Kyungsan-city, Kyungsang buk-Do (KR)**

(72) Inventor : **Ihm, Dae Woo**
**Sangah Appartment 3-102,**
**165 Ohgeum-Dong**
**Songpa-ku, Seoul (KR)**
Inventor : **Baek, Moon Soo**
**Dongsin Appartment Da-805,**
**Dogok-Dong**
**Kangnam-ku, Seoul (KR)**
Inventor : **Kim, Byung Ho**
**Sinil Yeonlip B-202,**
**Pakdal-Dong**
**Anyang-City, Kyunggi-Do (KR)**

(74) Representative : **Le Roux, Martine et al**
**Cabinet Beau de Loménie**
**158, rue de l'Université**
**F-75340 Paris Cédex 07 (FR)**

(54) **Preparation of a stabilized polyether ester elastomer composition.**

(57) A method for the preparation of a stabilized polyether-ester elastomer composition is disclosed.

The method comprises a step of : melt blending a copolyester consisting of short chain ester units and long chain ether units with an organic phosphite compound and an epoxy compound in the presence of a catalyst.

Preferably used is a combination of a pentaerythritol disphosphite, a diglycidyl ether of bisphenol A and an alkyl- or alkenyltriphenylphosphonium halide as catalyst.

The polyether-ester elastomer prepared is superior in thermal resistance, hydrolysis resistance and flow properties, so that it is suitable to extrusion blow molding into hoses, belts, industrial parts and auto-components.

EP 0 647 674 A1

## BACKGROUND OF THE INVENTION

### Field of the invention

The present invention relates, in general, to a method for preparing a polyether-ester elastomer and, more particularly, to a method for the preparation of polyether-ester elastomer, capable of improving thermal resistance, hydrolysis resistance, melt flow properties and other physical properties suitable for extrusion blow molding.

### Description of the Prior Art

As known to those skilled in the art, thermoplastic polyether-ester elastomer is a kind of block copolymer wherein rubber-like polyether soft segments and plastic polyester hard segments are irregularly linked to one another. Accordingly, since thermoplastic polyether-ester elastomer typically has excellent rubber-like properties, such as low-temperature durability, flexibility, elasticity and the like, and excellent plastic properties such as mechanical strength, heat resistance, low-temperature resistance, moldability and the like, it is useful for (flexible) hoses, belts, industrial elements, sport goods, auto-components and etc.

However, it is known that the thermoplastic polyether-ester elastomer is likely to generate the degradation of physical properties and the discoloration of yellowing an article made thereof when it is exposed to outdoor conditions including a ultraviolet light for a long time. Moreover, the thermoplastic polyether-ester resin is poor in melt flow properties and thus, when it is subjected to extrusion blow molding, it extends from a die. The extrusion blow articles made thereof have not stable forms, further being suspended.

In order to improve the thermal resistance and the hydrolysis resistance of polyether-ester elastomer, many methods have been proposed. For example, a polycarbodiimide compound and a phosphite compound are used alone or in combination, to provide hydrolysis resistance. The prepared resin, however, is inferior in melt flow properties.

As an attempt to make the polyether-ester elastomer having been improved melt viscosity and crystallization rate, aliphatic alkaline salts have been added. However, this technique is not preferred for practical use since it adversely affects the environmental stability of the elastomer.

Another attempt in that melt viscosity is improved by achieving crosslinking in the elastomer with primary or secondary amines has been made. For the increase of melt viscosity, an attempt of forming chemical crosslinks with a primary or secondary amine has been carried out. However, the resins provided by the attempt are also unstable to exterior conditions and are not suitable to the uses of fire hoses and auto-components.

## SUMMARY OF THE INVENTION

Therefore, an object of the present invention is to solve the problems encountered in prior art and to provide a method for preparing a polyether-ester elastomer suitable to extrusion blow molding, capable of providing superior heat resistance, hydrolysis resistance and melt flow properties, whereby the elastomer can be suitable to extrusion blow molding. Said method is as claimed in claim 1.

In accordance with the present invention, the object of the invention can be accomplished by providing a method for the preparation of polyether-ester elastomer, comprising a step of: melt compounding a copolyester consisting of two units represented by the following formulae I and II:

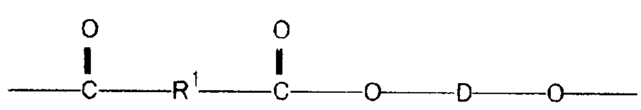

[I]

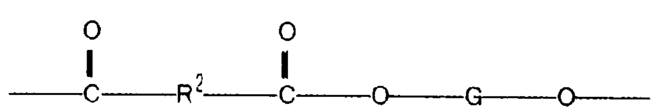

[II]

wherein,

$R^1$ and $R^2$ are the same or different and represent a divalent radical resulting from the removal of carboxyl group from a dicarboxylic acid having a molecular weight of not more than approximately 400;

D is a divalent radical resulting from the removal of hydroxy group from a short chain diol having a molecular weight of approximately 250 or less; and G is a divalent radical resulting from the removal of hydroxy group from a long chain ether glycol having a molecular weight of approximately 400 to approximately 4000, with a stabilizing agent represented by the following formula III:

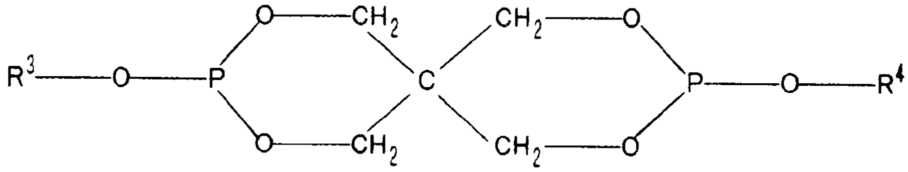

[III]

wherein,

$R^3$ and $R^4$, independently from each other, is a $C_2$-$C_{20}$ alkyl, $C_6$-$C_{20}$ aryl or $C_3$-$C_{20}$ cycloalkyl radical which is unsubstituted or substituted by a substituent selected from the methyl, ethyl, propyl, butyl, pentyl, hexyl, phenyl, diphenyl, cyclopropyl, cyclobutyl, cyclopentyl and cyclohexyl groups;
in combination with an epoxy compound represented by the following formula IV :

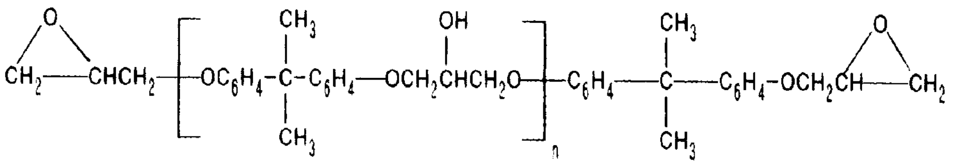

[IV]

wherein, n is an integer of 0 to 10,
under the influence of an alkyltriphenylphosphonium halide or alkenyltriphenylphosphonium halide catalyst.

These components, other objects and advantages of the present invention will be more apparent as following description proceeds.

## DETAILED DESCRIPTION OF THE INVENTION

According to the present invention, there is provided a polyether-ester elastomer comprising a stabilizing agent and an epoxy compound. The copolyester elastomer is prepared by melt blending a copolyester which consists of short chain ester units and long chain ether units, with small amounts of an organic phosphite and a bisphenolic epoxy compound in the presence of a catalyst.

The short ester unit adopted in the copolyester is composed of a dicarboxylic acid and a short chain diol. Preferred dicarboxylic acid is selected from the group consisting of a terephthalic acid, an isophthalic acid, a naphthalene dicarbonic acid, an adipic acid and a sebacic acid. As the short chain diol constituting the short chain ester unit, there is employed a low molecular weight diol preferably containing 2 to 15 carbon atoms, which usually has a molecular weight of not more than approximately 250. This short chain diol may include an aliphatic diol, such as ethylene glycol, propylene glycol, 1,4-butane diol, pentamethylene glycol, decamethylene glycol and 1,6-hexane diol, and a cyclodiol, such as cyclohexane diol. Consequently, the polyester unit is represented as the following formula I:

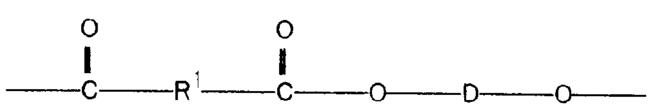

[I]

wherein, $R^1$ is a divalent radical resulting from the removal of carboxyl group from a dicarboxylic acid having a molecular weight of not more than approximately 400; and D is a divalent radical resulting from the removal of hydroxy group from a short chain diol having a molecular weight of not more than approximately 250.

On the other hand, the long chain ether unit used in the copolyester consists of a dicarboxylic acid and an aliphatic polyglycol component. Similarly to the dicarboxylic acid of the polyester unit, preferred dicarboxylic acid in the polyester unit also includes a terephthalic acid, an isophthalic acid, a naphthalene dicarbonic acid, an adipic acid and a sebacic acid. As the other component for the long chain ether unit, the aliphatic polyglycol

component typically has molecular weights ranging from approximately 400 to 4,000 and is selected from the group consisting of polyethylene glycol, polyisoprene glycol and polytetramethylene glycol. In preparing the elastomer, the aliphatic polyglycol is generally added in an amount of 0.02 to 0.3 mole, based on 1 mole of the dicarboxylic acid. In consequence, the long chain ether unit is represented as shown in the following formula II:

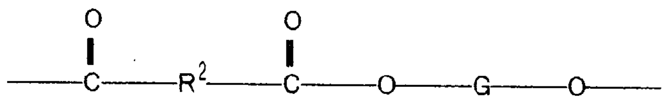

[II]

wherein, $R^2$ is a divalent radical resulting from the removal of carboxyl group from a dicarboxylic acid having a molecular weight of not more than approximately 400; and G is a divalent radical resulting from the removal of hydroxy group from a long chain ether glycol having a molecular weight of approximately 400 to 4000.

In accordance with the present invention, the short chain ester unit is preferably present in an amount of approximately 10 to 80 % by weight, based on the total weight of the polyether-ester elastomer.

For stabilizing the polymer, an organic phosphite compound represented as the following general formula III is added, in accordance with the present invention:

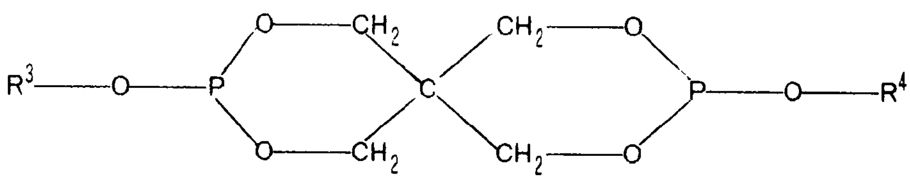

[III]

wherein, $R^3$ and $R^4$, independently from each other, are an unsubstituted or substituted alkyl, aryl or cycloalkyl radical as defined on page 4. An exemplary compound of the general formula III includes bis(2,4-di-tert-butylphenyl)pentaerythritol diphosphite and distearyl pentaerythritol diphosphite. This stabilizing agent is preferably added in amounts ranging from approximately 0.05 to 10 % by weight, based on the total weight of the polyetherester elastomer and more preferably ranging from approximately 0.1 to 10 % by weight.

The bisphenolic epoxy compound used in the present invention has the structure as follows:

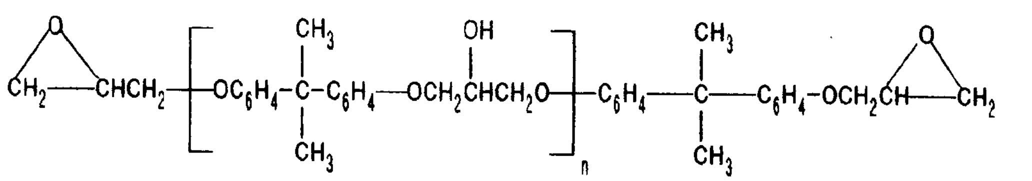

[IV]

wherein, n is an integer of 0 to 10. In this compound, when n is 0, the fluidity thereof increases. As n becomes larger, the viscosity thereof increases due to the increase of molecular weight. Preferred bisphenolic epoxy compound used in the present invention includes diglycidylether of bisphenol A and cyclohexanediepoxide of bisphenol A. The amount thereof is on the order of approximately 0.5 to 5.0 % by weight, based on the total weight of the polyether-ester elastomer and preferably 0.5 to 2.0 % by weight.

Under the influence of a catalyst, the polyether-ester elastomer according to the present invention is melt blended. As the catalyst, an alkyltriphenylphosphonium halide or alkenyltriphenylphosphonium halide is used.

The alkyl group is containing from 1 to 10 carbon atoms (and may consist in methyl, ethyl, propyl, butyl, pentyl, hexyl ...) and the alkenyl group is containing from 2 to 6 carbon atoms (and may consist in the allyl group...). The halide is selected from Cl or Br. Most preferred is alkyltriphenylphosphonium bromide and alkenyltriphenylphosphonium bromide. The amount of the catalyst is on the order of approximately 0.01 to 2.0 % by weight and preferably on the order of approximately 0.01 to 0.1% by weight.

The melt blending according to the invention is generally carried out between 180 and 250°C.

In order to better understand the nature of the present invention, a number of examples will now be described.

A copolyester consisting the polyester units and the polyether units was prepared and melt blended with the organic phosphite compound and the bisphenolic epoxy compound in the presence of the phosphonium

catalyst for better thermal resistance, hydrolysis resistance and melt flow properties according to the present invention. Measurements for -COOH terminal group, b value (yellow discoloration) and melt index were carried out.

Where not otherwise specified in the following examples, the expression "part" is by weight.

EXAMPLE 1

100 parts of dimethylterephthalate, 125 parts of 1,4-butanediol, 75 parts of polytetramethylene glycol (average molecular weight: 1,000), 0.2 part of tetrabutyltitanate (slurried to 1,4-butane diol) and 0.1 part of magnesium acetate were input into a flask equipped with a distillation column and a stainless steel stirrer provided with a paddle having the shape of the same length as the inner radius of the flask and rotatably disposed at a position of 3 mm above the flask bottom.

The inner temperature of the flask was slowly raised from 150 °C to 200 °C over one hour and the discharge rate of methanol was measured. When the discharge rate of methanol reached 70 percent of an ideal extraction amount, 0.1 part of tetrabutyltitanate as a catalyst, 0.4 part of 2,6-di-tert-butyl-4-methylphenol as an antioxidant, and 0.8 part of 2-(2-H-benzotriazole-2-yl)-4-methyl-6-dodecylphenol as a photo-stabilizer were added to the flask. Thereafter, the flask was heated from 150°C to 220 °C. At this time, the last stage of the ester interchange reaction was preferably carried out within about 20 minutes. Otherwise, a lot of tetrahydrofuran gases would have been generated by oxidation, adversely affecting reactivity and color tone.

After the completion of ester interchange reaction, the inner temperature of the reaction flask was slowly raised to 250 °C and the inner pressure of the flask is slowly reduced into 1 mmHg or less. It preferably took about 1 hour to perform the temperature rise and pressure reduction.

When the desired degree of polymerization was achieved, the reaction was stopped. Then, the prepared polymer was output as a form of strand, which was subsequently cooled in water and pelletized.

98.8 parts of the obtained resin, 1.0 part of diglycidylether of bisphenol A (n is 0 in the general formula IV), 0.1 part of bis(2,4-di-tert-butylphenyl)pentaerythritol diphosphite and 0.1 part of n-butyltriphenylphosphonium bromide were extruded and output as a form of strand, using an extruder. The resulting strand was subsequently cooled in water and pelletized.

The prepared elastomer was tested to measure the physical properties thereof.

For evaluating hydrolysis resistance, the pellet of elastomer was first laid in a reliability test apparatus controlled to have 80 % humidity and room temperature, and sampling was carried out four times over 67 hours, for example, 0, 5th, 17th and 67th hour, to measure terminal -COOH group values, color tone values and melt indexes for the 4 samples, respectively.

In order to measure the value of the terminal -COOH group, a solution of 0.15 N containing a benzyl alcohol solvent along with the sample was titrated with sodium hydroxide.

Using a melt indexer commercially available from Goethperd Company, Germany, the melt indexes of the samples were measured at 220°C under a load of 2.16 kg, respectively.

In case of the flow properties of the elastomer, it was judged with the melt index and the terminal -COOH group value which were shown when the time of the humidity test did not yet conduct and the elastomer was not subjected to molding.

The results are given as shown in the following Tables 1 and 2.

EXAMPLE 2

An elastomer was prepared in a manner similar to Example 1 except that, instead of diglycidylether of bisphenol A, DER 332, an epoxy compound that n is 3 in the general formula IV, commercially available from Dow Chemical Company, USA., was used.

The prepared elastomer was tested to measure the physical properties thereof. The results are given as shown in the following Tables 1 and 2.

EXAMPLE 3

An elastomer was prepared in a manner similar to Example 1 except that, instead of bis(2,4-di-tert-butylphenyl)pentaerythritol, distearyl pentaerythritol diphosphite was used.

The prepared elastomer was tested to measure the physical properties thereof. The results are given as shown in the following Tables 1 and 2.

COMPARATIVE EXAMPLE 1

An elastomer was prepared in a manner similar to Example 1 except that the organic phosphite compound, the epoxy compound and the catalyst of n-butyltriphenylphosphonium bromide were not used. The prepared elastomer was tested to measure the physical properties thereof. The results are given as shown in the following Tables 1 and 2.

COMPARATIVE EXAMPLE 2

An elastomer was prepared in a manner similar to Example 1 except that diglycidylether of bisphenol A and the catalyst of n-butyltriphenylphosphonium bromide were not used.

The prepared elastomer was tested to measure the physical properties thereof. The results are given as shown in the following Tables 1 and 2.

Table 1

Physical Properties Variation by Humidity Test Time

| Physical Properties according to Test Times | Example Nos. | | | | |
|---|---|---|---|---|---|
| | 1 | 2 | 3 | C1 | C2 |
| 0 hour | | | | | |
| Color tone (b value) | 3.1 | 3.4 | 3.2 | 5.5 | 4.2 |
| Terminal COOH value | 18 | 25 | 19 | 70 | 68 |
| Melt Index | 1.6 | 2.3 | 1.6 | 14.2 | 13.0 |
| 5 hours | | | | | |
| Color tone (b value) | 3.5 | 3.9 | 3.7 | 9.2 | 7.2 |
| Terminal COOH value | 25 | 31 | 27 | 121 | 85 |
| Melt Index | 2.2 | 2.9 | 2.4 | 18.5 | 14.5 |
| 17 hours | | | | | |
| Color tone (b value) | 5.4 | 7.2 | 5.9 | 14.5 | 9.6 |
| Terminal COOH value | 54 | 75 | 59 | 200 | 131 |
| Melt Index | 4.5 | 5.7 | 4.8 | 21.5 | 18.2 |
| 67 hours | | | | | |
| Color tone (b value) | 6.5 | 9.7 | 7.2 | 18.2 | 14.4 |
| Terminal COOH value | 95 | 128 | 102 | 282 | 212 |
| Melt Index | 10.2 | 13.8 | 11.5 | 28.3 | 22.4 |

* Terminal COOH value : $10^{-6}$ equivalent/g
Melt Index : g/10 min.

Table 2

Melt Index Variation by Molding Number

(unit : g/10 min)

| Molding Number | Example Nos. | | | | |
|---|---|---|---|---|---|
| | 1 | 2 | 3 | C1 | C2 |
| 0 | 1.6 | 2.3 | 1.6 | 14.2 | 13.0 |
| 1 | 2.8 | 3.2 | 2.9 | 17.3 | 13.8 |
| 2 | 4.2 | 4.5 | 4.2 | 23.5 | 17.2 |
| 3 | 5.6 | 6.0 | 5.9 | 31.4 | 21.5 |
| 4 | 7.4 | 7.8 | 7.7 | 40.5 | 28.4 |

* measured at 220 °C under 2.16 kg load

It is preferable to apply to outdoor articles such as industrial parts and auto-components the elastomer that has a color tone b value of 10 to 20, a terminal -COOH group value of 20 to 200 and a melt index of 5 to 15 g/10 min. When it is treated at room temperature under a humidity of 85 % for 67 hours. With regard to melt index by molding repetition number, it is preferable to have melt indexes ranging from 5 to 20 g/10 min after carrying out molding 4 times. In a view of flow properties suitable to extrusion blow molding, the polyetherester elastomer preferably has a melt index of 1 to 5 g/min and a terminal COOH value of 20.

Other features, advantages and embodiments of the invention disclosed herein will be readily apparent to those exercising ordinary skill after reading the foregoing disclosures. In this regard, while specific embodiments of the invention have been described in considerable detail, variations and modifications of these embodiments can be effected without departing from the spirit and scope of the invention as described and claimed.

**Claims**

1. A method for the preparation of polyether-ester elastomer, comprising a step of: melt blending a copolyester consisting of ester units represented by the following general formula I and ether units represented by the following general formula II with an organic phosphite compound and an epoxy compound in the presence of a catalyst

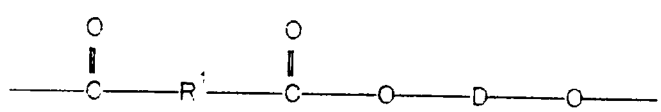

[I]

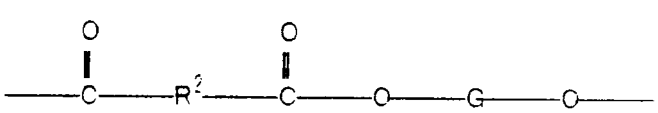

[II]

wherein

R¹ and R² are the same or different and represent a divalent radical resulting from the removal of carboxyl group from a dicarboxylic acid having a molecular weight of not more than approximately 400;

D is a divalent radical resulting from the removal of hydroxy group from a short chain diol having a molecular weight of approximately 250 or less; and G is a divalent radical resulting from the removal of hydroxy group from a long chain ether glycol having a molecular weight of approximately 400 to 4000.

2. A method according to Claim 1, wherein the amount of said ether unit is on the order of approximately 10 to 80 % by weight, based on the total weight of the polyether-ester elastomer.

3. A method according to Claim 1 or 2, wherein said organic phosphite compound is represented by the following general formula III:

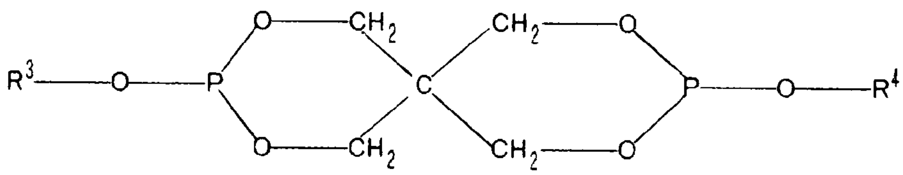

[III]

wherein,

$R^3$ and $R^4$, independently from each other, is a $C_2$-$C_{20}$ alkyl, $C_6$-$C_{20}$ aryl or $C_3$-$C_{20}$ cycloalkyl radical which is unsubstituted or substituted by a substituent selected from the methyl, ethyl, propyl, butyl, pentyl, hexyl, phenyl, diphenyl, cyclopropyl, cyclobutyl, cyclopentyl and cyclohexyl groups.

4. A method according to anyone of Claims 1 to 3, wherein said organic phosphite compound is added in amounts ranging from approximately 0.05 to 10 % by weight, based on the total weight of the polyether-ester elastomer.

5. A method according to anyone of Claims 1 to 4, wherein said epoxy compound is represented by the following general formula IV:

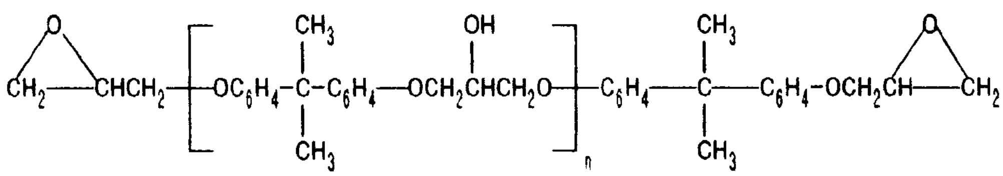

[IV]

wherein, n is an integer of 0 to 10.

6. A method according to anyone of Claims 1 to 5, wherein said epoxy compound is added in amounts ranging from approximately 0.5 to 5.0 % by weight, based on the total weight of the polyether-ester elastomer.

7. A method according to anyone of Claims 1 to 6, wherein said catalvst is an alkyltriphenylphosphonium halide or an alkenyltriphenylphosphonium halide.

8. A method according to anyone of Claims 1 to 7, wherein said catalyst is present in an amount of approximately 0.01 to 2.0 % by weight, based on the total weight of the polyether-ester elastomer.

European Patent Office

# EUROPEAN SEARCH REPORT

Application Number
EP 94 40 1474

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int.Cl.6) |
| Y | EP-A-0 443 457 (GENERAL ELECTRIC COMP.)<br>* claim 1 *<br>* page 5, line 38 - page 6, line 17 *<br>* page 9, line 30 - page 10, line 44 *<br>--- | 1,2,4-8 | C08K5/524<br>C08K5/15<br>C08K5/50<br>C08L67/02<br>C08G63/91 |
| Y | EP-A-0 334 620 (POLYPLASTICS CO. LTD.)<br>* claims 1,2,5,7 *<br>* page 2, line 52 - page 3, line 3 *<br>* page 4, line 2 - line 9 *<br>* page 5, line 3 - line 6 *<br>--- | 1,2,4-8 | |
| Y | US-A-3 723 568 (G.K. HOESCHELE)<br>* claims 1,7,8,11-13 *<br>* column 5, line 12 - column 7, line 44 *<br>* column 8, line 17 - line 59 *<br>* column 10, line 17 - line 50 *<br>--- | 1-6,8 | |
| Y | WO-A-91 05820 (EASTMAN KODAK COMP.)<br>* claims 1,2,5,8 *<br>* page 7, line 47 - page 8, line 25 *<br>--- | 1-6,8 | TECHNICAL FIELDS SEARCHED (Int.Cl.6) |
| X | CHEMICAL ABSTRACTS, vol. 111, no. 12, 18 September 1989, Columbus, Ohio, US;<br>abstract no. 98447,<br>* abstract *<br>& JP-A-1 029 456 (KANEGAFUCHI CHEM. IND. CO., LTD.) 31 January 1989<br>--- | 1,2,4,6 | C08K<br>C08L |
| X | PATENT ABSTRACTS OF JAPAN<br>vol. 7, no. 191 (C-182) 20 August 1983<br>& JP-A-58 091 758 (TORAY KK) 31 May 1983<br>* abstract *<br>--- | 1,2,4,6 | |
| A | EP-A-0 435 346 (AUSIMONT S.P.A.)<br>* claims 1,4-9 *<br>* page 2, line 43 - line 51 *<br>* page 7, line 16 - line 22 *<br>---<br>-/-- | 1-4 | |

The present search report has been drawn up for all claims

| Place of search | Date of completion of the search | Examiner |
|---|---|---|
| BERLIN | 20 December 1994 | Krische, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 94 40 1474

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | ANGEWANDTE MAKROMOLEKULARE CHEMIE, vol.137, December 1985, BASEL, CH pages 83 - 92 J.J. ZEILSTRA * page 84 - page 85 * * page 88 * ----- | 1-4 | |
| | | | TECHNICAL FIELDS SEARCHED (Int.Cl.6) |

The present search report has been drawn up for all claims

| Place of search | Date of completion of the search | Examiner |
|---|---|---|
| BERLIN | 20 December 1994 | Krische, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)